# FASCICULE DE BREVET EUROPEEN

(11) **EP 2 667 302 B1**
(45) Date de publication et mention de la délivrance du brevet: **07.08.2019**
(21) Numéro de dépôt: 13168389.8
(22) Date de dépôt: 17.05.2013
(51) Int. Cl.: G06F 9/50, H04L 29/08, G06F 9/455

(54) **Procédé de gestion du démarrage d'instances d'applications sur des machines virtuelles d'un réseau distribué**
Steuerungsverfahren für den Start mehrerer Applikationsinstanzen auf virtuellen Maschinen eines verteilten Systems
Method for managing the starting of instances of applications on virtual machines of a distributed network

(30) Priorité: 25.05.2012 FR 1254871
(43) Date de publication de la demande: 27.11.2013
(73) Titulaire: Schneider Electric Industries SAS, 92500 Rueil-Malmaison (FR)
(72) Inventeur: Dufrene, Pierre, 06140 Tourrettes sur Loup (FR); Schmitt, Günther, 63762 Grossostheim (DE)
(74) Mandataire: Hirsch & Associés

(56) Documents cités:
- EP-A1- 2 437 165
- US-A1- 2009 138 883
- US-A1- 2011 231 899

## Description

### Domaine technique de l'invention

La présente invention se rapporte à un procédé pour le démarrage d'instances d'applications sur des machines virtuelles distribuées sur un réseau. Dans un système distribué comprenant un ensemble de machines physiques et d'équipements, et dont les machines physiques, correspondant à des postes clients ou à des serveurs, hébergent des machines virtuelles aptes à mettre en oeuvre des applications, l'invention concerne l'élection d'un emplacement virtuel au sein d'une machine virtuelle pour y exécuter une instance d'application.

### Etat de la technique

Aujourd'hui, les systèmes distribués connus mettant en oeuvre une pluralité de machine physiques hébergeant des machines virtuelles pour l'exécution d'applications sont programmés manuellement de manière à déterminer, en fonction de critères, quelle machine virtuelle doit être sollicitée pour mettre en oeuvre une instance d'application sur requête d'un poste client.

Le principal critère utilisé repose alors sur la disponibilité de ressources matérielles, d'espace mémoire, de capacité de calcul.

Le document US 2011/0231899 A1 divulgue un système qui fournit un service d'informatique en nuage à partir d'un environnement d'informatique en nuage comportant une pluralité de ressources d'informatique en nuages.

Une autre technologie connue pour gérer l'exécution d'applications sur un réseau de machines virtuelles est fondée sur l'utilisation d'un hyperviseur dit de type 1. A titre d'illustration d'une technologie mettant en oeuvre le principe d'un tel hyperviseur, on pourra se référer au document EP 1 067 461 A1. Cependant, la mise en oeuvre d'un hyperviseur de type 1 présente certains inconvénients. D'abord, l'utilisation d'un tel hyperviseur dégrade les performances d'un système car cet outil consomme des ressources. Cela peut nuire également à des aspects de contraintes « temps-réel » associées à certaines applications. Par ailleurs, ce type d'équipement présente aujourd'hui un coût d'acquisition très élevé.

Le but de l'invention est par conséquent de proposer un procédé d'élection d'un emplacement virtuel au sein d'une machine virtuelle en vue d'y mettre en oeuvre une instance d'application, de manière automatique et autonome, et sans nécessiter la mise en oeuvre d'équipement ou de logiciel dédié complexe à cette fin.

### Exposé de l'invention

A cet effet, l'invention a pour objet un procédé d'élection d'un emplacement virtuel pour le démarrage d'une instance d'application dans un système distribué comprenant une pluralité de machines physiques distribuées sur un réseau, chaque machine physique hébergeant au moins une machine virtuelle, et chaque machine virtuelle comprenant au moins un emplacement virtuel pour l'exécution d'une instance d'application dans ladite machine virtuelle.

Ledit procédé, tel que défini dans la revendication 1, comprend l'élection d'un emplacement virtuel pour le démarrage d'une instance d'application comportant les étapes suivantes :
- la détermination d'un ensemble de slots d'application libres, c'est-à-dire non occupés par une instance d'application en cours d'utilisation,
- le calcul d'un score pour chaque emplacement virtuel libre, ledit calcul de score étant fonction d'au moins une contrainte,
- l'élection de l'emplacement virtuel pour le démarrage de l'instance d'application considérée, ledit emplacement virtuel élu étant celui présentant le meilleur score.

Avantageusement, un utilisateur ayant requis l'ouverture d'une application, le score d'un emplacement virtuel libre est calculé au moins à partir d'une première contrainte application, et l'évaluation de la première contrainte application associée audit emplacement virtuel libre consiste d'une part à déterminer si l'application requise est déjà ouverte ou non dans ledit emplacement virtuel libre considéré, et d'autre part à attribuer un score associé à la première contrainte application en fonction de cette détermination.

Avantageusement, le procédé selon l'invention est mis en oeuvre dans un système distribué susceptible d'exécuter un ensemble d'applications coopérant avec un ensemble d'équipements distribués sur le réseau.

Avantageusement, le score d'un emplacement virtuel libre peut être calculé au moins à partir d'une contrainte réseau, et, l'instance de l'application à démarrer étant destinée à coopérer avec un équipement du réseau, l'évaluation de la contrainte réseau associée audit emplacement virtuel libre consiste d'une part à déterminer si ledit équipement est joignable ou non, via le réseau, depuis la machine virtuelle hébergeant ledit emplacement virtuel libre, et d'autre part à attribuer un score associé à la contrainte réseau en fonction de cette détermination.

Avantageusement, le procédé selon l'invention est mis en oeuvre dans un système distribué susceptible d'exécuter au moins deux versions différentes de l'application requise et un utilisateur ayant requis l'ouverture d'une version donnée d'une application, et le score d'un emplacement virtuel libre est calculé au moins à partir d'une deuxième contrainte application, et l'évaluation de la deuxième contrainte application associée audit emplacement virtuel libre consiste d'une part à déterminer si, lorsque l'application requise est déjà ouverte dans ledit emplacement virtuel libre considéré, la version de ladite application ouverte est bien la version donnée requise, et d'autre part à attribuer un score associé à la deuxième contrainte application en fonction de cette détermination.

Avantageusement, un utilisateur ayant requis l'ouverture d'un projet donné dans une application, le score d'un emplacement virtuel libre peut être calculé au moins à partir d'une première contrainte projet, et l'évaluation de la première contrainte projet associée audit emplacement virtuel libre consiste d'une part à déterminer si, lorsque l'application requise est déjà ouverte dans ledit emplacement virtuel libre considéré, le projet donné requis est déjà ouvert ou non, et d'autre part à attribuer un score associé à la première contrainte projet en fonction de cette détermination.

Avantageusement, un utilisateur ayant requis l'ouverture d'un projet donné dans une application, le score d'un emplacement virtuel libre peut être calculé au moins à partir d'une deuxième contrainte projet, et l'évaluation de la deuxième contrainte projet associée audit emplacement virtuel libre consiste d'une part à déterminer, lorsque l'application requise est déjà ouverte dans ledit emplacement virtuel libre considéré, et qu'un projet est déjà ouvert dans ladite application requise mais ne correspond pas au projet donné requis, combien de fois ledit projet déjà ouvert a été ouvert, et d'autre part à attribuer un score associé à la deuxième contrainte projet en fonction de cette détermination.

Avantageusement, un utilisateur ayant requis l'ouverture d'une application, le score d'un emplacement virtuel libre peut être calculé au moins à partir d'une contrainte interface utilisateur, et l'évaluation de la contrainte interface utilisateur consiste d'une part à déterminer si ladite application requise requiert la disponibilité d'un périphérique donné, et d'autre part à attribuer un score associé à la contrainte interface utilisateur en fonction de cette détermination.

Avantageusement, le calcul du score d'un emplacement virtuel libre est fonction d'une pluralité de contraintes.

Avantageusement, chaque contrainte est associée à un coût et le score est égal à la somme des coûts associés à chacune des contraintes.

Avantageusement, chaque coût associé à une contrainte peut être nul, infini ou être égal à une valeur finie prédéfinie.

### Brève description des figures

D'autres caractéristiques et avantages vont apparaître dans la description détaillée qui suit faite en regard des dessins annexés qui représentent :
- la figure 1 : le schéma d'un système distribué mettant en oeuvre le procédé selon l'invention ;
- la figure 2 : un schéma bloc illustrant les étapes d'un mode de réalisation préféré du procédé selon l'invention.

### Description détaillée d'au moins un mode de réalisation

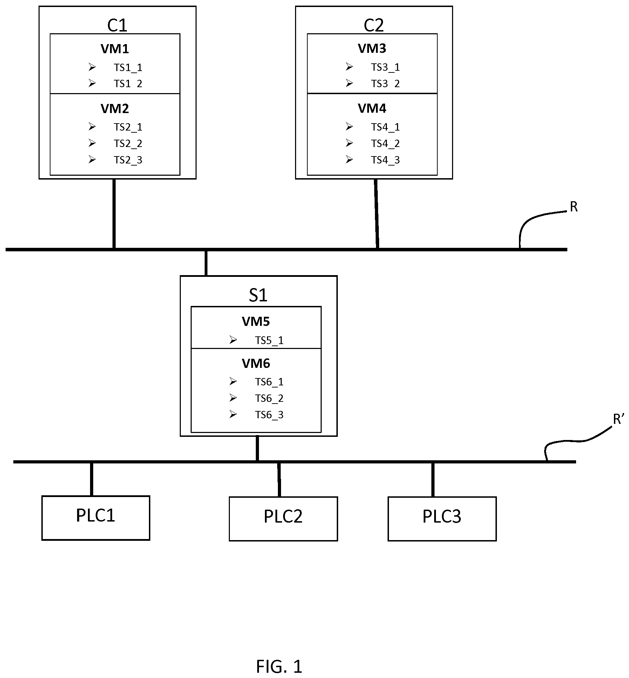

La figure 1 représente un schéma d'un système distribué comprenant des postes clients C1, C2, sur un réseau de communication R, un serveur S1, et des équipements industriels PLC1, PLC2, PLC3 sur un réseau industriel R', les réseaux de communication R et industriel R' étant interconnectés avec le serveur S1, ou un ensemble de serveurs.

Chaque poste client C1, C2 et chaque serveur S1 peut héberger une ou plusieurs machines virtuelles VM1, VM2, VM3, VM4, VM5, VM6, ces machines virtuelles étant aptes à exécuter des applications. Chaque machine virtuelle comprend à cet effet un ou plusieurs « slots d'application » TS1_1, TS1_2, ..., TS6_3, lesdits slots d'application correspondant à des emplacements virtuels prédéfinis en termes de ressources - mémoire, capacité de calcul d'un processeur ...etc. - dans lesquels des applications sont destinées à être exécutées.

Depuis un poste client C1 ou C2, un utilisateur est susceptible de requérir l'exécution d'une application. Ladite application peut, le cas échéant, devoir interagir avec un équipement, par exemple un automate du réseau industriel R', PLC1 ou PLC2 ou PLC3. Par ailleurs, l'application peut induire l'ouverture, l'édition, l'exécution, la création ...etc. d'un projet dans le cadre de cette application.

Le procédé selon l'invention concerne l'élection d'un slot pour le démarrage d'une instance d'application sur requête d'un utilisateur. Cette élection consiste en une boucle de sélection appliquée à l'ensemble des slots d'application « libres », c'est-à-dire non « utilisés », ce qui signifie qu'ils ne sont pas occupés une instance d'application en cours d'utilisation.

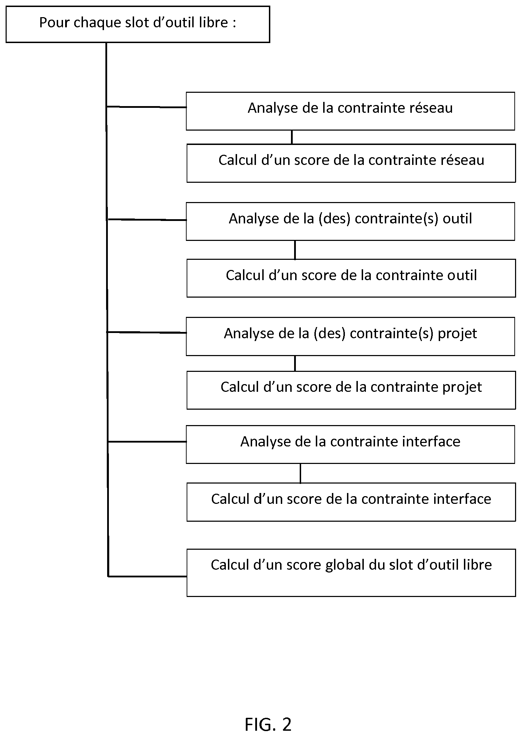

La figure 2 présente un exemple de boucle de sélection s'appliquant à chaque slot d'application libre fondée sur le calcul d'un score global réalisé par chacun desdits slots d'application libres, le score global étant déterminé à partir de scores réalisés vis-à-vis d'un ensemble de contraintes dont il a été choisi de tenir compte.

Ainsi, ladite boucle de sélection comprend le calcul d'un score global pour déterminer quel est le meilleur slot pour accueillir l'instance d'application requise. Ce score global est calculé, pour chaque slot d'application libre, en fonction de sa résistance à un ensemble de contraintes. Selon un mode de réalisation de l'invention, quatre types de contraintes sont pris en considération : une contrainte liée au réseau, une contrainte liée à l'application concernée, une contrainte liée au projet ou au document concerné, le cas échéant, et une contrainte lié à l'interface utilisateur, le cas échéant.

Selon un mode particulier de réalisation de l'invention, le score de chaque slot correspond à un calcul de résistance vis-à-vis des contraintes précédemment énumérées. Ainsi, un coût est attribué en fonction de la plus ou moins grande résistance du slot d'application considéré à la contrainte concernée ; plus la résistance est importante, plus le coût attribué est important, et plus le score est mauvais. Selon ce mode de réalisation, c'est le score le plus bas, correspondant à la résistance la plus faible qui détermine le slot élu pour mettre en oeuvre l'instance d'application requise.

La « contrainte réseau » consiste à déterminer si un équipement destiné à coopérer avec l'instance d'application requise est situé à un emplacement du réseau effectivement joignable depuis le slot d'application considéré.

Une contrainte concernant le nom de l'application dont il est requis le démarrage d'une instance peut être mise en oeuvre. Dans un contexte d'automatique industrielle, les applications concernées peuvent être par exemple des applications de supervision, de contrôle, ou d'édition de programmes d'automates. Dans la suite de la présente description, on appellera « première contrainte application » cette contrainte.

Pour un nom d'application donné, plusieurs versions peuvent coexister au sein d'un système distribué complexe. Par conséquent, une deuxième contrainte liée à l'application dont il est requis le démarrage d'une instance peut concerner le numéro de la version de l'application considérée. Dans la suite de la présente description, on appellera « deuxième contrainte application » cette contrainte.

Généralement, l'ouverture d'une application entraîne la création, l'édition ou l'exécution d'un projet, ou l'ouverture, l'édition d'un document. Si tel est le cas, une contrainte peut concerner le fait que le projet ou le document requis par l'utilisateur est déjà ouvert via l'application voulue, dans le slot d'application considéré, ou non. Dans la suite de la présente description, on appellera « première contrainte projet » cette contrainte.

Si le slot d'application considéré héberge déjà une instance de l'application requise mais que le projet ou le document déjà ouvert via cette application n'est pas celui voulu, une « deuxième contrainte projet », optionnelle, pourra consister à tenir compte du nombre d'ouvertures dudit projet ou dudit document déjà ouvert via ladite application. En effet, la contrainte sera plus forte, c'est-à-dire plus pénalisante, s'il s'agit, pour ouvrir le projet ou le document voulu par l'utilisateur, de fermer un projet ou un document auquel il a été accédé à de nombreuses reprises que de fermer un projet ou un document qui a rarement été édité.

Enfin, une contrainte liée à la nécessité de disposer d'une interface utilisateur peut également être prise en compte. Il s'agit en particulier de tenir compte de l'unicité du couple clavier / souris, ou de tout autre type de périphérique, associé à un poste client. Dans la suite de la présente description, on appellera « contrainte interface utilisateur » cette contrainte.

Selon le mode de mise en oeuvre préféré du procédé selon l'invention, la prise en compte, pour chaque slot d'application libre, des contraintes dont il a été choisi de tenir compte est réalisée au moyen d'un calcul de score. Selon ce mode de réalisation préféré, pour chaque slot d'application, un score est attribué à chaque contrainte, correspondant à un coût associé à la résolution de ladite contrainte. Ce coût peut être étalé entre 0 et +∞, allant de la contrainte nulle signifiant que la contrainte concernée est déjà résolue pour le slot d'application considéré, à la contrainte infinie signifiant que la contrainte concernée est insoluble dans le contexte du slot d'application considéré.

Entre ces deux extrêmes, des coûts peuvent être attribués, pour chaque slot d'application libre, à chacune des contraintes dont il est tenu compte. Plus la contrainte est considérée comme facile à résoudre, plus le coût qui lui est attribué est faible, et inversement.

Lorsqu'un coût infini est attribué à une contrainte, le slot d'application concerné ne peut pas être élu.

Lorsque tous les slots d'application libres ont obtenu leur score final, correspondant à la somme des coûts attribués à chaque contrainte dont il est tenu compte, c'est le slot ayant obtenu le meilleur score, c'est-à-dire, dans le cas présent, le plus faible total, qui est élu. Ce slot d'application élu est par conséquent amené à héberger l'instance d'application voulue par l'utilisateur.

A titre illustratif, dans le cadre de la mise en oeuvre du mode de réalisation préféré du procédé selon l'invention, il s'agit de définir des scores associés aux différents types de contrainte évoqués ci-dessus.

Concernant la contrainte réseau, un score nul est attribué au slot d'application libre appartenant à une machine virtuelle apte à joindre le ou les équipements du réseau auxquels l'instance d'application requise devra accéder. Si le ou l'un des équipements du réseau auxquels l'instance d'application requise devra accéder n'est pas joignable depuis la machine virtuelle hébergeant le slot d'application considéré, alors le coût associé à la contrainte réseau vaut +∞. Dans ce dernier cas, le slot d'application considéré est éliminé et ne pourra pas être élu.

Concernant la première contrainte application, un coût nul est attribué au slot d'application considéré si l'application requise est déjà ouverte dans le slot considéré. Si l'application requise n'est pas déjà ouverte dans le slot considéré, un coût différent de 0 et différent de +∞ est défini, par exemple, arbitrairement, la valeur 80.

La deuxième contrainte application est évaluée dans le cas où la première contrainte application a été associée à un coût nul. Il s'agit d'évaluer si c'est bien la version de l'application voulue par l'utilisateur qui est ouverte sur le slot considéré. Si c'est le cas, le coût associé est nul ; sinon, un coût équivalent au cas précédent concernant la première contrainte application est attribué au slot d'application considéré, pour cette deuxième contrainte application, soit par exemple, la valeur 80.

La première contrainte projet est similaire à la première contrainte application. Pour le slot d'application libre considéré, si, dans l'application requise déjà en cours d'exécution, le projet voulu par l'utilisateur est déjà ouvert, le coût de la première contrainte projet est nul. Si le projet voulu n'est pas déjà ouvert, un coût différent de 0 et différent de +∞ est défini, par exemple, arbitrairement, la valeur 40. En effet, le coût associé à la résolution de la première contrainte projet est de préférence inférieur au coût de la résolution de la première contrainte application puisque l'ouverture d'un projet dans une application déjà ouverte est a priori moins important que le démarrage complet d'une application. Cependant, la détermination du coût associé à une contrainte spécifique doit être évaluée au cas par cas.

La deuxième contrainte projet est optionnelle. Il s'agit d'évaluer dans quelle mesure la fermeture d'un projet en vue d'ouvrir le projet voulu par l'utilisateur est pénalisante, dans le cas où l'application requise est déjà ouverte dans le slot d'application considéré. Il est en effet probable que lorsqu'un projet a été édité à de nombreuses reprises, le coût d'une fermeture de ce projet est plus important que le coût associé à la fermeture d'un projet auquel il est rarement accédé. Par exemple, il est possible d'attribuer un coût égal à 20 lorsque le projet ouvert, et potentiellement à fermer, a été édité à dix reprises depuis le démarrage du système, et un coût égal à 5 lorsque le projet ouvert, et potentiellement à fermer, a été édité à une seule reprise.

La contrainte interface utilisateur est particulière. Comme cela a été décrit, il s'agit en particulier de tenir compte de l'unicité du couple clavier / souris associé à une machine physique. Ainsi, le procédé selon l'invention peut prévoir que dans la cas où une machine physique héberge une machine virtuelle dont un slot d'application est occupé par une instance d'application en cours d'utilisation par un premier utilisateur et nécessitant la disponibilité du clavier et de la souris associés à ladite machine virtuelle, alors aucun autre slot d'application de la machine virtuelle, voire, éventuellement, de la machine physique qui l'héberge, ne peut être élu pour mettre en oeuvre une instance d'application sur requête d'un deuxième utilisateur, nécessitant également la disponibilité du clavier et de la souris. Ainsi, dès lors qu'un slot d'application d'une machine virtuelle met en oeuvre une instance d'application en cours d'utilisation par un premier utilisateur et nécessitant la disponibilité du clavier et de la souris associés à ladite machine virtuelle, l'ensemble des slots d'application de la machine virtuelle, voire de la machine physique qui l'héberge, sont marqués informatiquement comme présentant une résistance infinie, c'est-à-dire un coût infini, vis-à-vis de la contrainte interface utilisateur lorsqu'un utilisateur distinct du premier utilisateur requiert un slot d'application pour la mise en oeuvre d'une instance application nécessitant également la disponibilité du clavier et de la souris. Ce marquage informatique perdure jusqu'à ce que l'ensemble des slots d'application de la machine virtuelle considérée, voire de la machine physique qui l'héberge, ont été libérés par le premier utilisateur de toute instance d'application nécessitant la disponibilité du clavier et de la souris.

Ladite contrainte interface utilisateur est nulle dans les autres cas.

La prise en compte de chaque contrainte et le calcul d'un score global, comme cela est présenté à la figure 2, permettent de déterminer le slot d'application libre réalisant le meilleur score. Ce slot d'application est par conséquent élu pour mettre en oeuvre l'instance d'application requise par l'utilisateur.

Par ailleurs, pour la mise en oeuvre du procédé selon l'invention, il peut être prévu un gestionnaire de ressources. Ce composant est en particulier apte à faire appliquer la boucle de sélection décrite précédemment et aboutissant à l'élection d'un slot d'application pour l'exécution d'une instance d'application requise par un utilisateur. C'est également ce gestionnaire de ressources qui gère l'état « libre » ou « utilisé » des différents slots d'application. Ainsi, lorsqu'un slot d'application a été élu pour mettre en oeuvre une instance d'application, le gestionnaire de ressources passe l'état dudit slot d'application à l'état « utilisé ». Réciproquement, lorsqu'un utilisateur indique qu'il n'utilise plus une instance d'application, le gestionnaire de ressource passe l'état dudit slot d'application à l'état « libre ». Au démarrage du système, tous les slots d'application de toutes les machines virtuelles de toutes les machines physiques sont a priori initialisés à l'état « libre ».

En résumé, dans un système distribué comprenant une pluralité de machines physiques hébergeant des machines virtuelles comprenant des emplacements virtuels, appelés slots d'application dans la présente description, pour l'exécution d'instances d'applications, le procédé selon l'invention permet d'élire de façon autonome un slot d'application parmi une pluralité de slots d'application libres comme étant le meilleur slot d'application apte à mettre en oeuvre une instance d'application sur requête d'un utilisateur.

## Revendications

1. Procédé d'élection d'un emplacement virtuel pour le démarrage d'une instance d'application dans un système distribué comprenant une pluralité de machines physiques (C1, C2, S1) distribuées sur un réseau (R, R'), chaque machine physique hébergeant au moins une machine virtuelle (VM1, VM2 ..., VM6), et chaque machine virtuelle comprenant au moins un emplacement virtuel pour l'exécution d'une instance d'application dans ladite machine virtuelle (VM1, VM2 ..., VM6),
ledit procédé comprenant l'élection d'un emplacement virtuel pour le démarrage d'une instance d'application, un utilisateur ayant requis l'ouverture d'une instance d'une version donnée d'une application, le système distribué étant susceptible d'exécuter au moins deux versions différentes de l'application requise, ladite élection comportant les étapes suivantes :
- la détermination d'un ensemble d'emplacements virtuels (TS1_1, TS1_2, ..., TS6_3) libres, c'est-à-dire non occupés par une instance d'application en cours d'utilisation, un emplacement virtuel (TS1_1, TS1_2, ..., TS6_3) étant prédéfini par des ressources comprenant des capacités de calcul et des capacités mémoire et dans lequel des applications sont destinées à être exécutées,
- le calcul d'un score pour chaque emplacement virtuel libre,
- l'élection de l'emplacement virtuel pour le démarrage de l'instance d'application considérée, ledit emplacement virtuel élu étant celui présentant le meilleur score,
**caractérisé en ce que** le score d'un emplacement virtuel (TS1_1, TS1_2, ..., TS6_3) libre est calculé au moins à partir d'une première et d'une deuxième contraintes application, **en ce que** l'évaluation de la première contrainte application associée audit emplacement virtuel libre consiste d'une part à déterminer si l'application requise est déjà ouverte ou non dans ledit emplacement virtuel libre considéré, et d'autre part à attribuer un score associé à la première contrainte application en fonction de cette détermination, et **en ce que** l'évaluation de la deuxième contrainte application associée audit emplacement virtuel libre consiste d'une part à déterminer si, lorsque l'application requise est déjà ouverte dans ledit emplacement virtuel (TS1_1, TS1_2, ..., TS6_3) libre considéré, la version de ladite application ouverte est bien la version donnée requise, et d'autre part à attribuer un score associé à la deuxième contrainte application en fonction de cette détermination.

2. Procédé selon la revendication 1, **caractérisé en ce qu'**il est mis en oeuvre dans un système distribué susceptible d'exécuter un ensemble d'applications coopérant avec un ensemble d'équipements distribués sur le réseau.

3. Procédé selon la revendication 2, **caractérisé en ce que** le score d'un emplacement virtuel libre est calculé au moins à partir d'une contrainte réseau, et, l'instance de l'application à démarrer étant destinée à coopérer avec un équipement du réseau, **en ce que** l'évaluation de la contrainte réseau associée audit emplacement virtuel (TS1_1, TS1_2, ..., TS6_3) libre consiste d'une part à déterminer si ledit équipement est joignable ou non, via le réseau, depuis la machine virtuelle (VM1, VM2, ..., VM6) hébergeant ledit emplacement virtuel libre, et d'autre part à attribuer un score associé à la contrainte réseau en fonction de cette détermination.

4. Procédé selon l'une des revendications précédentes, un utilisateur ayant requis l'ouverture d'un projet donné dans une application, **caractérisé en ce que** le score d'un emplacement virtuel (TS1_1, TS1_2, ..., TS6_3) libre est calculé au moins à partir d'une première contrainte projet, et **en ce que** l'évaluation de la première contrainte projet associée audit emplacement virtuel libre consiste d'une part à déterminer si, lorsque l'application requise est déjà ouverte dans ledit emplacement virtuel (TS1_1, TS1_2, ..., TS6_3) libre considéré, le projet donné requis est déjà ouvert ou non, et d'autre part à attribuer un score associé à la première contrainte projet en fonction de cette détermination.

5. Procédé selon l'une des revendications précédentes, un utilisateur ayant requis l'ouverture d'un projet donné dans une application, **caractérisé en ce que** le score d'un emplacement virtuel (TS1_1, TS1_2, ..., TS6_3) libre est calculé au moins à partir d'une deuxième contrainte projet, et **en ce que** l'évaluation de la deuxième contrainte projet associée audit emplacement virtuel (TS1_1, TS1_2, ..., TS6_3) libre consiste d'une part à déterminer, lorsque l'application requise est déjà ouverte dans ledit emplacement virtuel libre considéré, et qu'un projet est déjà ouvert dans ladite application requise mais ne correspond pas au projet donné requis, combien de fois ledit projet déjà ouvert a été ouvert, et d'autre part à attribuer un score associé à la deuxième contrainte projet en fonction de cette détermination.

6. Procédé selon l'une des revendications précédentes, un utilisateur ayant requis l'ouverture d'une application, **caractérisé en ce que** le score d'un emplacement virtuel libre est calculé au moins à partir d'une contrainte interface utilisateur, et **en ce que** l'évaluation de la contrainte interface utilisateur consiste d'une part à déterminer si ladite application requise requiert la disponibilité d'un périphérique donné (PLC1, PLC2, PLC3), et d'autre part à attribuer un score associé à la contrainte interface utilisateur en fonction de cette détermination.

7. Procédé selon l'une quelconque des revendications précédentes, **caractérisé en ce que** le calcul du score d'un emplacement virtuel (TS1_1, TS1_2, ..., TS6_3) libre est fonction d'une pluralité de contraintes.

8. Procédé selon la revendication 7, **caractérisé en ce que** chaque contrainte est associée à un coût et **en ce que** le score est égal à la somme des coûts associés à chacune des contraintes.

9. Procédé selon la revendication 8, **caractérisé en ce que** chaque coût associé à une contrainte peut être nul, infini ou être égal à une valeur finie prédéfinie.

## Patentansprüche

1. Verfahren zum Auswählen eines virtuellen Standorts zum Starten einer Applikationsinstanz in einem verteilten System, umfassend mehrere physische Maschinen (Cl, C2, S1), die über ein Netzwerk (R, R') verteilt sind, wobei jede physische Maschine mindestens eine virtuelle Maschine (VM1, VM2 ..., VM6) beherbergt und wobei jede virtuelle Maschine mindestens einen virtuellen Standort zur Ausführen einer Applikationsinstanz in der virtuellen Maschine (VM1, VM2 ..., VM6) aufweist,
wobei das Verfahren das Auswählen eines virtuellen Standorts zum Starten einer Applikationsinstanz aufweist, wobei ein Benutzer das Öffnen einer Instanz einer bestimmten Version einer Applikation angefordert hat, wobei das verteilte System geeignet ist, mindestens zwei verschiedene Versionen der angeforderten Applikationen auszuführen, wobei das Auswählen die folgenden Schritte aufweist:
- das Bestimmen eines Satzes von freien virtuellen Standorten (TS1_1, TS1_2, ..., TS6_3), d.h. die nicht von einer Applikationsinstanz besetzt sind, die gerade verwendet wird, wobei ein virtueller Standort (TS1_1, TS1_2, ..., TS6_3) durch Ressourcen vorgegeben ist, die Rechenkapazitäten und Speicherkapazitäten aufweisen, und wobei Applikationen dazu bestimmt sind, ausgeführt zu werden,
- das Berechnen einer Punktzahl für jeden freien virtuellen Standort,
- das Auswählen eines virtuellen Standorts zum Starten der betreffenden Applikationsinstanz, wobei der ausgewählte virtuelle Standort jener ist, der die höchste Punktzahl aufweist,
**dadurch gekennzeichnet, dass** die Punktzahl eines freien virtuellen Standortes (TS1_1, TS1_2, ..., TS6_3) mindestens aus einer ersten und einer zweiten Applikationsanforderung berechnet wird, dadurch, dass das Bewerten der ersten Applikationsanforderung, die mit dem freien virtuellen Standort verbunden wird, einerseits darin besteht, zu bestimmen, ob die angeforderte Applikation in dem betreffenden freien virtuellen Standort bereits geöffnet ist oder nicht, und andererseits darin, eine Punktzahl, die der ersten Applikationsanforderung zugeordnet wird, in Abhängigkeit von diesem Bestimmen zu vergeben, und dadurch, dass das Bewerten der zweiten Applikationsanforderung, die mit dem freien virtuellen Standort verbunden wird, einerseits darin besteht, zu bestimmen, wenn die angeforderte Applikation in dem betreffenden freien virtuellen Standort (TS1_1, TS1_2, ..., TS6_3) bereits geöffnet ist, ob die Version der geöffneten Applikation die angeforderte gegebene Applikation ist, und andererseits darin, eine Punktzahl, die der zweiten Applikationsanforderung zugeordnet ist, in Abhängigkeit von diesem Bestimmen zu vergeben.

2. Verfahren nach Anspruch 1, **dadurch gekennzeichnet, dass** es in einem verteilten System umgesetzt wird, das einen Satz von Applikationen ausführen kann, die mit einer Reihe von Geräten zusammenwirken, die über das Netzwerk verteilt sind.

3. Verfahren nach Anspruch 2, **dadurch gekennzeichnet, dass** die Punktzahl eines freien virtuellen Standortes mindestens ausgehend von einer Netzwerkanforderung berechnet wird und, wobei die Instanz der zu startenden Applikation dazu bestimmt ist, mit einem Gerät des Netzwerks zusammenzuwirken, dadurch, dass das Bewerten der Netzwerkanforderung, die mit dem freien virtuellen Standort (TS1_1, TS1_2, ..., TS6_3) verbunden wird, einerseits darin besteht, zu bestimmen, ob das Gerät über das Netzwerk von der virtuellen Maschine (VM1, VM2, ..., VM6), die den freien virtuellen Standort beherbergt, erreichbar ist oder nicht, und andererseits darin, eine Punktzahl, die der Netzwerkanforderung zugeordnet wird, in Abhängigkeit von diesem Bestimmen zu vergeben.

4. Verfahren nach einem der vorhergehenden Ansprüche, wobei ein Benutzer das Öffnen eines bestimmten Projektes in einer Applikation angefordert hat, **dadurch gekennzeichnet, dass** die Punktzahl eines freien virtuellen Standortes (TS1_1, TS1_2, ..., TS6_3) mindestens aus einer ersten Projektanforderung berechnet wird, und dadurch, dass das Bewerten der ersten Projektanforderung, die mit dem freien virtuellen Standort verbunden wird, einerseits darin besteht, zu bestimmen, wenn die angeforderte Applikation in dem betreffenden freien virtuellen Standort (TS1_1, TS1_2, ..., TS6_3) bereits geöffnet ist, ob das angeforderte bestimmte Projekt bereits geöffnet ist oder nicht, und andererseits darin, eine Punktzahl, die der ersten Projektanforderung zugeordnet wird, in Abhängigkeit von diesem Bestimmen zu vergeben.

5. Verfahren nach einem der vorhergehenden Ansprüche, wobei ein Benutzer das Öffnen eines bestimmten Projektes in einer Applikation angefordert hat, **dadurch gekennzeichnet, dass** die Punktzahl eines freien virtuellen Standortes (TS1_1, TS1_2, ..., TS6_3) mindestens aus einer zweiten Projektanforderung berechnet wird, und dadurch, dass das Bewerten der zweiten Projektanforderung, die mit dem freien virtuellen Standort (TS1_1, TS1_2, ..., TS6_3) verbunden wird, einerseits darin besteht, zu bestimmen, wenn die angeforderte Applikation in dem betreffenden freien virtuellen Standort bereits geöffnet ist und wenn ein Projekt in der angeforderten Applikation bereits geöffnet ist aber nicht dem angeforderten bestimmten Projekt entspricht, wie oft das Projekt bereits geöffnet worden ist, und andererseits darin, eine Punktzahl, die der zweiten Projektanforderung zugeordnet wird, in Abhängigkeit von diesem Bestimmen zu vergeben.

6. Verfahren nach einem der vorhergehenden Ansprüche, wobei ein Benutzer das Öffnen einer Applikation angefordert hat, **dadurch gekennzeichnet, dass** die Punktzahl eines freien virtuellen Standortes mindestens aus einer Benutzerschnittstellen-Anforderung berechnet wird, und dadurch, dass das Bewerten der Benutzerschnittstellen-Anforderung einerseits darin besteht, zu bestimmen, ob die angeforderte Applikation die Verfügbarkeit eines bestimmten Peripheriegeräts (PLC1, PLC2, PLC3) erfordert, und andererseits darin, eine Punktzahl, die der Benutzerschnittstellen-Anforderung zugeordnet wird, in Abhängigkeit von diesem Bestimmen zu vergeben.

7. Verfahren nach einem der vorhergehenden Ansprüche, **dadurch gekennzeichnet, dass** das Berechnen der Punktzahl eines freien virtuellen Standortes (TS1_1, TS1_2, ..., TS6_3) von mehreren Anforderungen abhängt.

8. Verfahren nach Anspruch 7, **dadurch gekennzeichnet, dass** jede Anforderung mit einem Kostenaufwand verbunden wird und dadurch, dass die Punktzahl gleich der Summe der Kosten ist, die mit jeder der Anforderungen verbunden wird.

9. Verfahren nach Anspruch 8, **dadurch gekennzeichnet, dass** jeder Kostenaufwand, der mit einer Anforderung verbunden wird, Null, unendlich sein kann oder gleich einem vordefinierten endlichen Wert sein kann.

## Claims

1. A method for selecting a virtual slot to start up an instance of an application in a distributed system comprising a plurality of physical machines (CI, C2, S1) distributed on a network (R, R'), each physical machine housing at least one virtual machine (VM1, VM2, ..., VM6), and each virtual machine comprising at least one virtual slot for running an application instance in said virtual machine (VM1, VM2, ..., VM6),
said method comprising selecting a virtual slot for starting up an application instance, a user having requested the opening of a given version of an application, the distributed system being capable of running at least two different versions of the requested application, said selection including the following steps:
- determining a set of free virtual slots (TS1_1, TS1_2, ..., TS6_3), i.e., those not occupied by an application instance in use, a virtual slot (TS1_1, TS1_2, ..., TS6_3) being predefined by resources comprising computing capacities and memory capacities and defined as a location within which applications are due to be executed,
- computing a score for each free virtual slot,
- selecting the virtual slot to start up the considered application instance, said selected virtual slot being that having the best score,
**characterized in that** the score for a free virtual slot (TS1_1, TS1_2, ..., TS6_3) is computed at least from a first and a second application constraints, **in that** the evaluation of the first application constraint associated with said free virtual slot consists on the one hand of determining whether the requested application is already open or not in said considered free virtual slot, and on the other hand of awarding a score associated with the first application constraint as a function of that determination, and **in that** the evaluation of the second application constraint associated with said free virtual slot consists on the one hand of determining whether, when the requested application is already open in said considered free virtual slot (TS1_1, TS1_2, ..., TS6_3), the version of said open application is indeed the requested given version, and on the other hand awarding a score associated with the second application constraint as a function of that determination.

2. The method according to claim 1, **characterized in that** it is carried out in a distributed system capable of running a set of applications cooperating with a set of equipment distributed on the network.

3. The method according to claim 2, **characterized in that** the score of a free virtual slot is computed from at least one network constraint, and, the instance of the application to be started being designed to cooperate with equipment on the network, **in that** evaluating the network constraint associated with said free virtual slot (TS1_1, TS1_2, ..., TS6_3) consists on the one hand of determining whether that equipment is reachable, via the network, from the virtual machine (VM1, VM2, ..., VM6) housing said free virtual slot, and on the other hand awarding a score associated with the network constraint as a function of that determination.

4. The method according to any of the preceding claims, a user having requested the opening of a given project in an application, **characterized in that** the score of a free virtual slot (TS1_1, TS1_2, ..., TS6_3) is computed at least from a first project constraint, and **in that** the evaluation of the first project constraint associated with said free virtual slot consists on the one hand of determining whether, when the requested application is already open in said considered free virtual slot (TS1_1, TS1_2, ..., TS6_3), the requested given project is already open, and on the other hand, awarding a score associated with the first project constraint as a function of that determination.

5. The method according to any of the preceding claims, a user having requested the opening of a given project in an application, **characterized in that** the score of a free virtual slot (TS1_1, TS1_2, ..., TS6_3) is computed from at least one second project constraint, and **in that** the evaluation of the second project constraint associated with said free virtual slot (TS1_1, TS1_2, ..., TS6_3) consists on the one hand of determining, when the requested application is already open in said considered free virtual slot, and a project is already open in said requested application that does not correspond to the requested given project, how many times said project that is already open has been opened, and on the other hand awarding a score associated with the second project constraint as a function of that determination.

6. The method according to any of the preceding claims, a user having requested the opening of an application, **characterized in that** a score for a free virtual slot is computed at least from a user interface constraint, and the evaluation of the user interface constraint consists on the one hand of determining whether said requested application requires the availability of a given peripheral (PLC1, PLC2, PLC3), and on the other hand of awarding a score associated with the user interface constraint as a function of that determination.

7. The method according to claim 1, **characterized in that** the computation of the score of a free virtual slot (TS1_1, TS1_2, ..., TS6_3) depends on multiple constraints.

8. The method according to claim 7, **characterized in that** each constraint is associated with a cost and the score is equal to the sum of the costs associated with each of the constraints.

9. The method according to claim 8, **characterized in that** each cost associated with a constraint may be zero, infinite or have a value equal to a predefined finite value.
